# EUROPEAN PATENT APPLICATION

(11) **EP 4 797 024 A1**
(43) Date of publication of application: **26.08.2026**
(21) Application number: 26159458.4
(22) Date of filing: 19.02.2026
(51) Int. Cl.: G05D 1/226, G05D 1/246, G05D 1/698, G05D 1/82

(54) **MATERIAL HANDLING VEHICLE CONTROL BASED ON NETWORK SIGNAL STRENGTH**

(30) Priority: 21.02.2025 US 202563761407 P
(71) Applicant: The Raymond Corporation, Greene, NY 13778 (US)
(72) Inventor: GONCALVES, Fernando D., Vestal, NY (US); HEITMANN, Erric L., Jamesville, NY (US); YAHNER, Joseph T., Chenango Forks, NY (US)
(74) Representative: Zacco Sweden AB

(57) **Abstract**

Systems, methods, and media for material handling vehicle control based on network signal strength. An example material handling vehicle includes memory and processing circuitry to establish, via a wireless network, a connection with a server that is associated with a facility in which the material handling vehicle operates; receive, via the wireless network and from the server, data that is usable to affect operation of the material handling vehicle based on whether the material handling vehicle is located in a first area of the facility or is located within a second area of the facility that have different signal strengths; and affect operation of the material handling vehicle using the data that is received from the server.

## Description

### CROSS-REFERENCE TO RELATED APPLICATION

This application claims the benefit of and priority to U.S. Provisional Patent Application No. 63/761,407 filed February 21, 2025, the entirety of which is incorporated by reference herein.

### BACKGROUND

Material handling vehicles (MHVs) have been developed to transport goods loaded onto generally standardized transport platforms. For example, forklifts can be used to lift goods loaded onto a pallet and move the goods between locations in a facility such as a warehouse or a factory. Some material handling vehicles, such as automated guided vehicles (AGVs), can operate autonomously without a human operator. Other material handling vehicles are non-autonomous.

For certain types of vehicles there are training requirements imposed by various government agencies, laws, rules and regulations. For example, the United States Department of Labor Occupational Safety and Health Administration (OSHA) imposes a duty on employers to train and supervise operators of various types of material handling vehicles. Recertification every three years is also required. In certain instances, refresher training in relevant topics shall be provided to the operator when required. In all instances, the operator remains in control of the material handling vehicle during performance of any actions. Further, a warehouse manager remains in control of the fleet of material handling vehicles within the warehouse environment. The training of operators and supervision to be provided by warehouse managers requires among other things proper operational practices including among other things that an operator remain in control of the material handling vehicle, pay attention to the operating environment, and always look in the direction of travel.

### BRIEF SUMMARY

The present disclosure relates generally to the control of material handling vehicle operations based on signal strength.

In one aspect, the present disclosure provides a system. The system includes memory including machine-readable instructions; a network interface to connect the system to a wireless network; and processing circuitry. The processing circuitry is to execute the machine-readable instructions to determine a first signal strength associated with the wireless network in a first area of a facility in which the material handling vehicle operates; determine a second signal strength associated with the wireless network in a second area of the facility, the second signal strength being lower than the first signal strength; receive location data indicative of a position of the material handling vehicle within the facility; and affect operation of the material handling vehicle based on whether the position of the material handling vehicle is associated with the first area of the facility or the second area of the facility.

In another aspect, the present disclosure provides a material handling vehicle. The material handling vehicle includes memory including machine-readable instructions; a network interface to connect the material handling vehicle to a wireless network; and processing circuitry. The processing circuitry is to execute the machine-readable instructions to transmit location data that is indicative of a position of the material handling vehicle within a facility to a server; receive a control signal from the server based on a determination that the position of the material handling vehicle is associated with a second area of a facility instead of a first area of the facility, wherein the first area of the facility is associated with a first signal strength associated with the wireless network, the second area of the facility is associated with a second signal strength associated with the wireless network, and the second signal strength is lower than the first signal strength; and affect operation of the material handling vehicle based on the control signal that is received from the server.

In yet another aspect, the present disclosure provides another system. The system includes memory including machine-readable instructions; a network interface to connect the system to a wireless network; and processing circuitry. The processing circuitry is to execute the machine-readable instructions to determine a first signal strength associated with the wireless network in a first area of a facility in which the material handling vehicle operates; determine a second signal strength associated with the wireless network in a second area of the facility, the second signal strength being lower than the first signal strength; and transmit data to the material handling vehicle via the wireless network that is usable by the material handling vehicle to affect operation of the material handling vehicle based on whether the material handling vehicle is located in the first area of the facility or in the second area of the facility.

In still another aspect, the present disclosure provides another material handling vehicle. The material handling vehicle includes memory including machine-readable instructions; a network interface to connect the material handling vehicle to a wireless network; and processing circuitry. The processing circuitry is to execute the machine-readable instructions to establish a connection with a server associated with a facility in which the material handling vehicle operates via the wireless network; receive data from the server, the data being usable to affect operation of the material handling vehicle depending on whether the material handling vehicle is located in a first area of the facility or a second area of the facility, wherein the first area of the facility is associated with a first signal strength associated with the wireless network, the second area of the facility is associated with a second signal strength associated with the wireless network, and the second signal strength is lower than the first signal strength; and affect operation of the material handling vehicle using the data that is received from the server.

The foregoing and other aspects and advantages of the present disclosure will appear from the following description. In the description, reference is made to the accompanying drawings which form a part hereof, and in which there is shown by way of illustration a preferred configuration of the disclosure. Such configuration does not necessarily represent the full scope of the disclosure, however, and reference is made therefore to the claims and herein for interpreting the scope of the present disclosure.

### BRIEF DESCRIPTION OF DRAWINGS

The present disclosure will be better understood and features, aspects, and advantages other than those set forth above will become apparent when consideration is given to the following detailed description thereof. Such detailed description references the following drawings.
FIG. 1 is a block diagram showing components of an example system for controlling material handling vehicle operations, in accordance with some aspects of the disclosure.
FIG. 2 is an illustration showing an example signal strength heat map associated with the system of FIG. 1, in accordance with some aspects of the disclosure.
FIG. 3 is a flow diagram showing an example process for controlling material handling vehicle operations that can be implemented using the system of FIG. 1, in accordance with some aspects of the disclosure.
FIG. 4 is a flow diagram showing another example process for controlling material handling vehicle operations that can be implemented using the system of FIG. 1, in accordance with some aspects of the disclosure.
FIG. 5 is a flow diagram showing yet another example process for controlling material handling vehicle operations that can be implemented using the system of FIG. 1, in accordance with some aspects of the disclosure.
FIG. 6 is a flow diagram showing still another example process for controlling material handling vehicle operations that can be implemented using the system of FIG. 1, in accordance with some aspects of the disclosure.
FIG. 7 is a flow diagram showing a further example process for controlling material handling vehicle operations that can be implemented using the system of FIG. 1, in accordance with some aspects of the disclosure.

### DETAILED DESCRIPTION

Before any aspects of the present disclosure are explained in detail, it is to be understood that the present disclosure is not limited in its application to the details of construction and the arrangement of components set forth in the description or illustrated in the drawings. The present disclosure is capable of other aspects and of being practiced or of being carried out in various ways. Also, it is to be understood that the phraseology and terminology used herein is for the purpose of description and should not be regarded as limiting. The use of "including", "comprising", or "having", and variations thereof herein, is meant to encompass the items listed thereafter and equivalents thereof as well as additional items. Unless specified or limited otherwise, the terms "mounted", "connected", "supported", and "coupled", and variations thereof are used broadly and encompass both direct and indirect mountings, connections, supports, and couplings. Further, "connected" and "coupled" are not restricted to physical or mechanical connections or couplings.

The following discussion is presented to enable a person skilled in the art to make and use aspects of the present disclosure. Various modifications to the illustrated aspects will be readily apparent to those skilled in the art, and the generic principles herein can be applied to other aspects and applications without departing from aspects of the present disclosure. Thus, aspects of the present disclosure are not intended to be limited to aspects shown but are to be accorded the widest scope consistent with the principles and features disclosed herein. The following detailed description is to be read with reference to the figures, in which like elements in different figures have like reference numerals. The figures, which are not necessarily to scale, depict selected aspects and are not intended to limit the scope of aspects of the present disclosure. Skilled artisans will recognize the examples provided herein have many useful alternatives and fall within the scope of aspects of the present disclosure.

It is also to be appreciated that material handling vehicles are designed in a variety of classes and configurations to perform a variety of tasks. It will be apparent to those of skill in the art that the present disclosure is not limited to any specific type of material handling vehicle, and can also be provided with various other types of material handling vehicle classes and configurations, including for example, lift trucks, forklift trucks, reach trucks, towing trucks, turret trucks, side loader trucks, counterbalanced lift trucks, pallet stacker trucks, order pickers, transtackers, and man-up trucks, and can be commonly found in warehouses, factories, shipping yards, and, generally, wherever pallets, large packages, or loads of goods can be required to be transported from place to place. The various systems and methods disclosed herein are suitable for any of operator controlled, pedestrian controlled, remotely controlled, and autonomously controlled material handling vehicles.

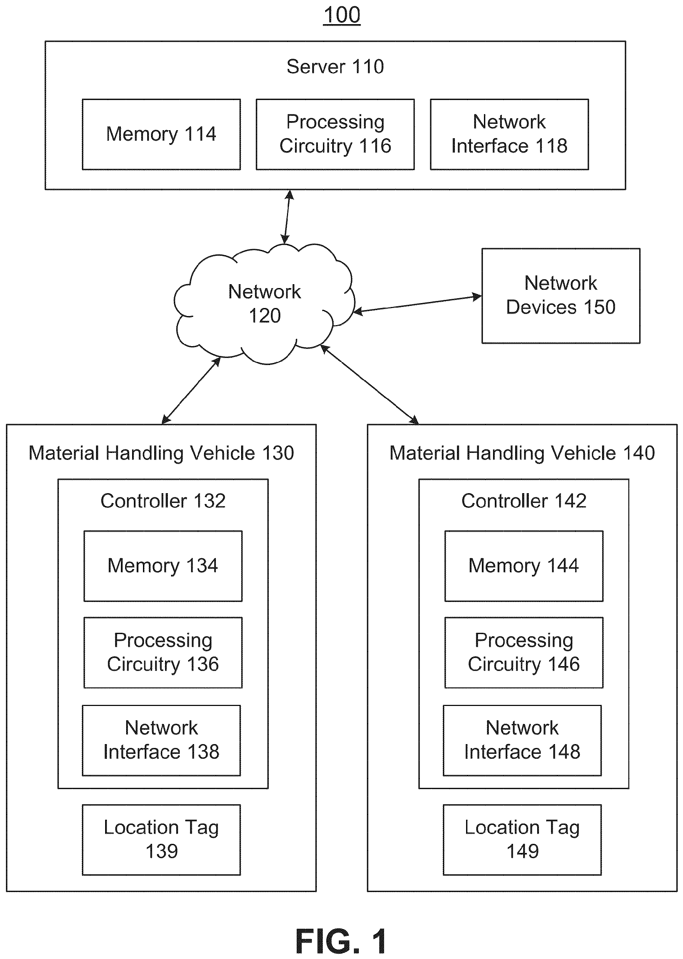

Referring to FIG. 1, a block diagram illustrating an example system 100 for controlling material handling vehicle operations is shown, in accordance with some aspects of the disclosure. As shown, the system 100 can include a server 110, a network 120, a material handling vehicle 130, a material handling vehicle 140, and one or more network devices 150. The material handling vehicle 130 and the material handling vehicle 140 can each be implemented using any suitable type of material handling vehicle, such as those noted above, for example. The material handling vehicle 130 and the material handling vehicle 140 can be autonomously operated material handling vehicles or can be material handling vehicles that are operated by a human operator.

The system 100 can be used to provide control of material handling vehicle operations (e.g., to affect operation of the material handling vehicle 130, the material handling vehicle 140, other material handling vehicles) based on signal strength associated with the network 120 within different areas of a facility. The facility can be a warehouse, for example, among other possible types of facilities in which the material handling vehicle 130 and the material handling vehicle 140 may operate. Depending on various factors associated with the facility (e.g., the design of the facility, the products stored in the facility at any given time, etc.), certain areas of the facility may have poor wireless coverage, at least for some periods of time.

As shown in FIG. 1, the server 110 can include memory 114, processing circuity 116, and a network interface 118. The memory 114 can store machine-readable instructions that can be executed by the processing circuitry 116. The network interface 118 can connect the server 110 to the network 120 to facilitate electronic communications between the server 110 and the network 120. The memory 114 can include any suitable storage device or devices that can be used to store machine-readable instructions, and any other data associated with the system 100. The memory 114 can include suitable types of memory including different types of volatile memory, non-volatile memory, random-access memory (RAM), read-only memory (ROM), electrically erasable programmable read-only memory (EEPROM), one or more flash drives, one or more hard disks, one or more add-on (expansion) cards, one or more solid state drives, one or more optical drives, and/or other types of memory. The memory 114 can include one or more non-transitory computer readable storage media having instructions stored thereon that, when executed by the processing circuitry 116, cause the processing circuitry 116 to implement operations in accordance with the instructions.

The processing circuitry 116 can include any suitable implementations of a hardware processor or combination of hardware processors, including one or more central processing units (CPUs), one or more graphics processing units (GPUs), and/or other types of hardware processing components. The processing circuitry 116 can include any suitable number of processing cores, including single core processors, dual core processors, and/or any other suitable types of processor core configurations. The network interface 118 can include any suitable hardware, firmware, and/or software for communicating data over suitable types of communication networks, including the network 120 and/or other communication networks that can be accessed by the server 110. For example, the network interface 118 can include one or more suitable types of transceivers, chips and/or chip sets, antennas, radios, communications ports, and/or other suitable types of electronic components that facilitate electronic communications.

The server 110 can be implemented in various suitable manners, including using one or multiple computing devices and/or systems in one or multiple locations. For example, the server 110 can be implemented using one or more "on-premises" server computers installed at the facility in which the material handling vehicle 130 and the material handling vehicle 140 operate, using one or more "cloud" server computers installed in a remote location relative to the facility in which the material handling vehicle 130 and the material handling vehicle 140 operate, or using a combination of both (e.g., a "hybrid") implementation. The system 100 can implement one or more aspects of an iWAREHOUSE^{®} telematics system. For example, the system 100 can include an iWAREHOUSE^{®} Real-Time Location System (RTLS).

The network 120 as shown in FIG. 1 can be implemented using various suitable types of electronic communications networks and/or combinations of networks. For example, the network 120 can be implemented using various suitable types of wireless networks such as a Wi-Fi network, a radio network (e.g., an ultra-wideband (UWB) network, etc.), a cellular network (e.g., a 3G network, a 4G network, a 5G network, etc.), and/or a Bluetooth network, among other possible types of networks. The coverage of the network 120 can vary throughout the facility in which the material handling vehicle 130 and the material handling vehicle 140 operate depending on various factors, such as noted above.

As shown in FIG. 1, the material handling vehicle 130 can include a controller 132 and a location tag 139. The controller 132 can include memory 134, processing circuitry 136, and a network interface 138. The controller 132 can be implemented in various suitable manners, including using one or multiple electronic devices installed on the material handling vehicle 130. The memory 134 can include any suitable storage device or devices that can be used to store machine-readable instructions, and any other data associated with the material handling vehicle 130 or the system 100 more broadly. The memory 134 can include suitable types of memory including different types of volatile memory, non-volatile memory, RAM, ROM, EEPROM, one or more flash drives, one or more hard disks, one or more add-on (expansion) cards, one or more solid state drives, one or more optical drives, and/or other types of memory. The memory 114 can include one or more non-transitory computer readable storage media having instructions stored thereon that, when executed by the processing circuitry 136, cause the processing circuitry 136 to implement operations in accordance with the instructions.

The processing circuitry 136 can include any suitable implementations of a hardware processor or combination of hardware processors, including one or more CPUs, one or more GPUs, and/or other types of hardware processing components. The processing circuitry 136 can include any suitable number of processing cores, including single core processors, dual core processors, and/or any other suitable types of processor core configurations. The network interface 138 can include any suitable hardware, firmware, and/or software for communicating data over suitable types of communication networks, including the network 120 and/or other communication networks that can be accessed by the controller 132. For example, the network interface 138 can include one or more suitable types of transceivers, chips and/or chip sets, antennas, radios, and other suitable types of electronic components that facilitate electronic communications. The location tag 139 can include any suitable hardware, firmware, and/or software for communicating location data indicative of a position of the material handling vehicle 130 within the facility. For example, the location tag 139 can be attached to the material handling vehicle 130, and the location tag 139 can be used to calculate the precise location of the material handling vehicle 130 based on the position of the location tag 139 relative to one or more of the network devices 150.

As shown in FIG. 1, the material handling vehicle 140 can similarly include a controller 142 and a location tag 149. The controller 142 can include memory 144, processing circuitry 146, and a network interface 148. The controller 142 can be implemented in various suitable manners, including using one or multiple electronic devices installed on the material handling vehicle 140. The memory 144 can include any suitable storage device or devices that can be used to store machine-readable instructions, and any other data associated with the material handling vehicle 140 or the system 100 more broadly. The memory 144 can include suitable types of memory including different types of volatile memory, non-volatile memory, RAM, ROM, EEPROM, one or more flash drives, one or more hard disks, one or more add-on (expansion) cards, one or more solid state drives, one or more optical drives, and/or other types of memory. The memory 144 can include one or more non-transitory computer readable storage media having instructions stored thereon that, when executed by the processing circuitry 146, cause the processing circuitry 146 to implement operations in accordance with the instructions.

The processing circuitry 146 can include any suitable implementations of a hardware processor or combination of hardware processors, including one or more CPUs, one or more GPUs, and/or other types of hardware processing components. The processing circuitry 146 can include any suitable number of processing cores, including single core processors, dual core processors, and/or any other suitable types of processor core configurations. The network interface 148 can include any suitable hardware, firmware, and/or software for communicating data over suitable types of communication networks, including the network 120 and/or other communication networks that can be accessed by the controller 142. For example, the network interface 148 can include one or more suitable types of transceivers, chips and/or chip sets, antennas, radios, and other suitable types of electronic components that facilitate electronic communications. The location tag 149 can include any suitable hardware, firmware, and/or software for communicating location data indicative of a position of the material handling vehicle 140 within the facility. For example, the location tag 149 can be attached to the material handling vehicle 140, and the location tag 149 can be used to calculate the precise location of the material handling vehicle 140 based on the position of the location tag 149 relative to one or more of the network devices 150.

The network devices 150 can include any suitable devices within the system 100 that help facilitate the control functionality based on signal strength as described herein. For example, the network devices 150 can include devices associated with the network 120 such as routing devices, network switches, modems, and any other suitable types of devices and components that can help facilitate provision of the network 120. The network devices 150 can also include devices that are associated with an iWAREHOUSE^{®} RTLS system or another similar type of system installed at the facility in which the material handling vehicle 130 and the material handling vehicle 140 operate. For example, the network devices 150 can include one or more location devices used to determine the position of the material handling vehicle 130 and/or the material handling vehicle 140 within the facility. The location devices can include network anchor devices that are installed in fixed locations throughout the facility to provide a reference framework and allow the system 100 to track the location of the material handling vehicle 130 and the material handling vehicle 140 via the location tag 139 and the location tag 149, respectively. The location devices can also include bridge devices that send location data (e.g., collected from the network anchor devices and/or the location tag 139 and the location tag 149) to the server 110, for example. The network devices 150 can also include various suitable types of signal strength boosting devices that can be installed in different areas of the facility in which the material handling vehicle 130 and the material handling vehicle 140 operate. The network devices 150 can also include various types of computing devices, such as workstations (e.g., computing devices or systems installed in the facility in which the material handling vehicle 130 and the material handling vehicle 140 operate) and personal computing devices (e.g., smartphones, tablets, laptops, etc.), for example.

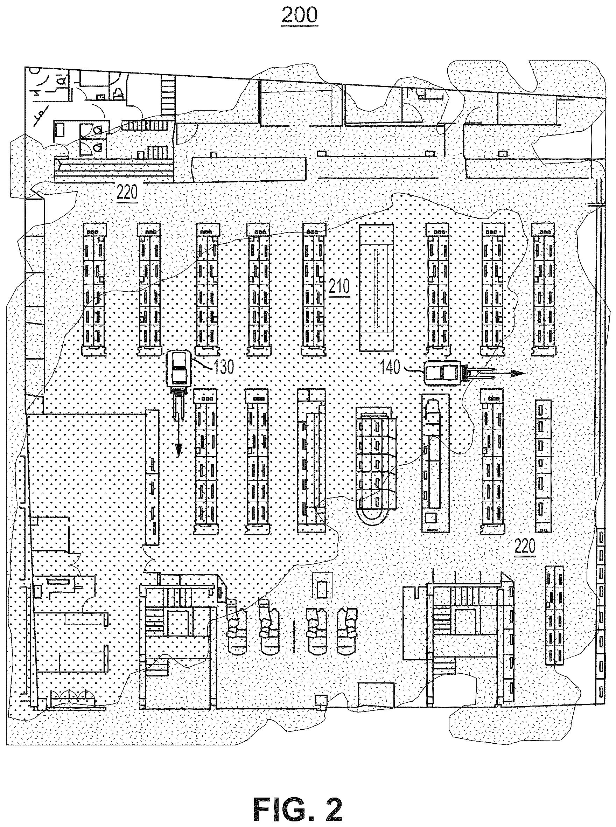

Referring to FIG. 2, an illustration showing an example signal strength heat map 200 associated with the system 100 is shown, in accordance with some aspects of the disclosure. The signal strength heat map 200 generally represents how the signal strength associated with the network 120 varies throughout different areas of the facility in which the material handling vehicle 130 and the material handling vehicle 140 operate. As shown in FIG. 2, the signal strength heat map 200 indicates that the signal strength associated with the network has a first signal strength in a first area 210 of the facility and a second signal strength in a second area 220 of the facility. The first signal strength in the first area 210 is generally higher than the second signal strength in the second area 220. As shown in FIG. 2, the material handling vehicle 130 is traveling within the first area 210 and is not approaching any boundary associated with the first area 210. The material handling vehicle 140 is also shown to be traveling within the first area 210. However, the material handling vehicle 140 is shown to be approaching a boundary between the first area 210 and the second area 220, and thus the material handling vehicle 140 is soon to experience a reduction in signal strength associated with the network 120.

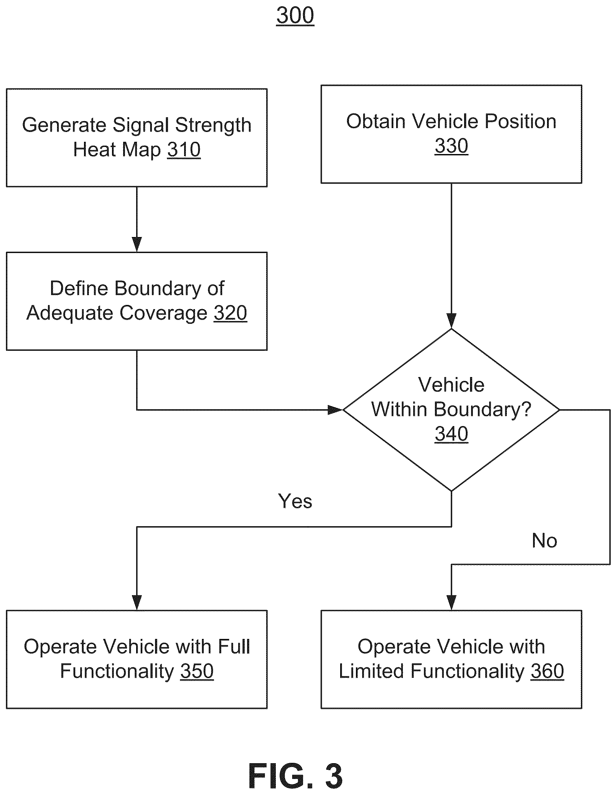

Referring to FIG. 3, a flow diagram of an example process 300 for controlling material handling vehicle operations is shown, in accordance with some aspects of the disclosure. The process 300 can generally be performed by the system 100 to affect operation of the material handling vehicle 130 and/or the material handling vehicle 140 based on signal strength associated with the network 120. For example, the process 300 can be performed by the server 110 within the system 100.

At block 310, the process 300 can include generating a signal strength heat map. For example, the server 110 can generate the signal strength heat map 200 as shown in FIG. 2. The server 110 can generate the signal strength heat map 200 in various suitable manners. For example, the server 110 can receive data from one or more devices connected to the network 120 (e.g., the controller 132, the controller 142, the network devices 150, etc.) that is indicative of the signal strength associated with the network 120 at different locations in the facility in which the material handling vehicle 130 and the material handling vehicle 140 operate. The material handling vehicle 130 and the material handling vehicle 140 can, in some examples, be equipped with on-board systems that measure signal strength associated with the network 120. The server 110 can also execute one or more simulations to predict the signal strength associated with the network 120 at different locations in the facility in which the material handling vehicle 130 and the material handling vehicle 140 operate. Moreover, personnel associated with the facility in which the material handling vehicle 130 and the material handling vehicle 140 operate can conduct a site survey to determine the signal strength associated with the network 120 at different locations in the facility. As such, the server 110 can generate the signal strength heat map 200 using empirically obtained data and/or via simulation.

Using these approaches, the server 110 can also update the signal strength heat map 200 in real-time. For example, the server 110 can be configured to update the signal strength heat map 200 at periodic time intervals (e.g., every hour, every twelve hours, every day, etc.) and/or in response to different types of triggers (e.g., changes in signal strength data, installation of signal strength boosting devices, etc.). Moreover, the signal strength heat map 200 can define any variable number and type of different areas with different levels of signal strength. For example, instead of just two different areas (e.g., high and low), the signal strength heat map 200 could define three or more different areas with three different levels of signal strength (e.g., high, medium, low), and the server 100 could affect operation of the material handling vehicle 130 and/or the material handling vehicle 140 differently for each of the different areas. The signal strength heat map 200 generated by the server 110 can generally include a range of coordinates (e.g., x-y position coordinates, etc.) that is associated with each different area type included in the signal strength heat map 200 (e.g., a first range of coordinates for the first area 210, a second range of coordinated for the second area 220, a third range of coordinates for a third area (e.g., as a "medium" signal strength area), etc.).

At block 320, the process 300 can include defining a boundary of adequate coverage. For example, the server 110 can define a boundary between the first area 210 and the second area 220. The boundary can be strategically set based on various configurable parameters to affect operation of the material handling vehicle 130 and/or the material handling vehicle 140 as they approach and/or as they cross the boundary. For example, the boundary can be set such that there is some variable level of "cushion" (e.g., 5 yards, 10 yards, etc.) between the first area 210 and the second area 220. This cushion can allow the server 110 to affect operation of the material handling vehicle 130 and/or the material handling vehicle 140 while they are still in the first area 210 but as they are approaching the second area 220 (e.g., like the material handling vehicle 140 as shown in FIG. 2). The boundary defined at block 320 can be represented within the signal strength heat map 200.

At block 330, the process 300 can include obtaining a vehicle position. For example, the server 110 can receive location data that is indicative of the position of the material handling vehicle 130 within the facility. The server 110 can receive the location data at block 330 in various suitable manners. For example, the server 110 can receive the location data directly from the material handling vehicle 130 (e.g., via the controller 132 and/or the location tag 139) via the network 120. The server 110 can also receive the location data indirectly through the system 100. For example, the server 110 can receive at least a portion of the location data from one or more of the network devices 150 (e.g., the server 110 can receive the location data from a location device installed in a fixed location in the facility). Additionally, or alternatively, the controller 132 and/or the controller 142 can perform the location determination functionality at block 330.

At block 340, the process 300 can include determining whether or not a vehicle is within the boundary. For example, the server 110 can compare the position of the material handling vehicle 130 obtained at block 330 to the signal strength heat map 200 to determine if the material handling vehicle 130 is within the boundary or not. If the vehicle is within the boundary (block 340 = yes), the process 300 can then include operating the vehicle with full functionality at block 350. However, if the vehicle is not within the boundary (block 340 = no), the process 300 can then include operating the vehicle with limited functionality. For example, if the server 110 determines that the position of the material handling vehicle 130 obtained at block 330 falls within the first area 210, the server 110 can ensure that the material handling vehicle 130 is operating with no limitations on its functionality (e.g., the server 110 can remove limits that were previously imposed by sending one or more control signals to the material handling vehicle 130 via the network 120). However, if the server 110 determines that the position of the material handling vehicle 130 obtained at block 330 falls within the first area 210, the server 110 can limit the functionality of the material handling vehicle 130 in various suitable manners. For example, the server 110 can send one or more control signals to the material handling vehicle 130 via the network 120 to reroute the material handling vehicle 130, to lower a maximum speed of the material handling vehicle 130, and/or to delay communications for transmission via the network 120, among other possibilities. For example, the server 110 can reroute the material handling vehicle 130 such that its path to complete a particular order only goes through the first area 210 and not the second area 220. Additionally, or alternatively, the controller 132 and/or the controller 142 can perform the vehicle control functionality at block 340, block 350, and/or block 360.

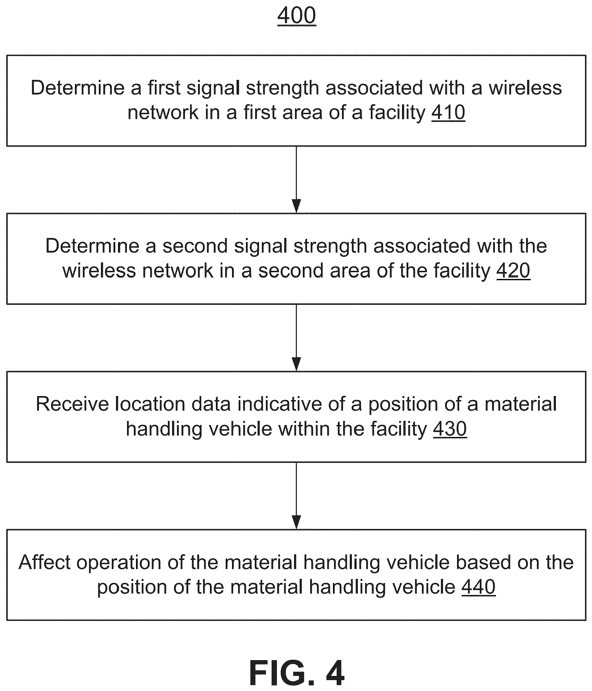

Referring to FIG. 4, a flow diagram of another example process 400 for controlling material handling vehicle operations is shown, in accordance with some aspects of the disclosure. The process 400 can generally be performed by the system 100 to affect operation of the material handling vehicle 130 and/or the material handling vehicle 140 based on signal strength associated with the network 120. For example, the process 400 can again be performed by the server 110 within the system 100.

At block 410, the process 400 can include determining a first signal strength associated with a wireless network in a first area of a facility. For example, the server 110 can determine the first signal strength as being associated with the first area 210. The server 110 can determine the first signal strength at block 410 in a variety of suitable manners. For example, the server 110 can receive data from one or more devices connected to the network 120 (e.g., the controller 132, the controller 142, the network devices 150, etc.) that is indicative of the signal strength associated with the network 120 in the first area 210. The server 110 can also execute one or more simulations to predict the signal strength associated with the network 120 in the first area 210. Moreover, personnel associated with the facility can conduct a site survey to determine the signal strength associated with the network 120 in the first area 210, and the server 110 can use data from the site survey (e.g., as uploaded to the server 110 by personnel that conduct the site survey, etc.) to determine the first signal strength. The first signal strength can vary depending on the type of network connection being analyzed. For example, if the first signal strength is associated with a Wi-Fi connection, the first signal strength can be a "good" signal strength in the range of -35 decibel-milliwatts (dBm) to -60 dBm. As another example, if the first signal strength is associated with a cellular connection, the first signal strength can be a "good" signal strength in the range of -45 dBm to -70 dBm.

At block 420, the process 400 can include determining a second signal strength that is associated with a wireless network in a second area of the facility. For example, the server 110 can determine the second signal strength as being associated with the second area 220. The server 110 can determine the second signal strength at block 420 in a variety of suitable manners. For example, the server 110 can receive data from one or more devices connected to the network 120 (e.g., the controller 132, the controller 142, the network devices 150, etc.) that is indicative of the signal strength associated with the network 120 in the second area 220. The server 110 can also execute one or more simulations to predict the signal strength associated with the network 120 in the second area 220. Moreover, personnel associated with the facility can conduct a site survey to determine the signal strength associated with the network 120 in the second area 220, and then the server 110 can use data from the site survey (e.g., as uploaded to the server 110, etc.) to determine the second signal strength. The second signal strength can vary depending on the type of network connection being analyzed. For example, if the second signal strength is associated with a Wi-Fi connection, the second signal strength can be a "poor" signal strength in the range of -70 dBm to -85 dBm. If the second signal strength is associated with a cellular connection, the second signal strength can be a "poor" signal strength in the range of -80 dBm to -95 dBm. Generally, the second signal strength can be lower than the first signal strength, indicating that the material handling vehicle 130 and the material handling vehicle 140 may experience connectivity issues associated with the network 120 when traveling through the second area 220.

At block 430, the process 400 can include receiving location data indicative of a position of a material handling vehicle within the facility. For example, the server 110 can receive location data associated with the material handling vehicle 140. The server 110 can receive the location data at block 430 in a variety of suitable manners. For example, the server 110 can receive the location data directly from the material handling vehicle 140 (e.g., via the controller 142 and/or the location tag 149) via the network 120. The server 110 can also receive the location data indirectly through the system 100. For example, the server 110 can receive at least a portion of the location data from one or more of the network devices 150 (e.g., the server 110 can receive the location data from a location device installed in a fixed location in the facility). The position of the material handling vehicle 140 can be represented in the form of specific coordinates (e.g., latitude and longitude, x-y position defined within an iWAREHOUSE^{®} RTLS system, etc.). Also, in some cases, the position of the material handling vehicle can include vectorized information associated with the material handling vehicle 140 (e.g., direction heading and speed of the material handling vehicle 140).

At block 440, the process 400 can include affecting the operation of the material handling vehicle based on the position of the material handling vehicle. For example, the server 110 can send one or more control signals to the material handling vehicle 140 at block 440 to affect operation of the material handling vehicle 140 based on the position of the material handling vehicle 140 as determined based on the location data received at block 430. The server 110 can affect operation of the material handling vehicle 140 at block 440 in various suitable manners depending on whether the server 110 determines that the position of the material handling vehicle 140 is associated with the first area 210 or the second area 220. For example, the server 110 can send one or more control signals to the material handling vehicle 140 that generally limit certain functionality of the material handling vehicle 140 responsive to determining that the position of the material handling vehicle 140 is associated with the second area 220.

Limiting the functionality of the material handling vehicle 140 can include causing the material handling vehicle 140 to delay communications for transmission via the network 120. For example, if the server 110 determines that the material handling vehicle 140 is in or soon to be in the second area 220, the server 110 can cause the material handling vehicle 140 to delay scheduled communications to the server 110 (e.g., communications about orders completed, battery life, signal strength, log data, etc.) for any suitable period of time or until some type of trigger occurs (e.g., until the material handling vehicle 140 returns to the first area 210). As another example, if the server 110 determines that the material handling vehicle 140 is in or soon to be in the second area 220, the server 110 can lower a maximum speed of the material handling vehicle 140 (e.g., change a maximum speed parameter from 5 miles per hour (mph) to 2 mph). Similarly, the server 110 can undo any limitations that may have been imposed on the material handling vehicle 140 based on a determination that the material handling vehicle 140 has moved from the second area 220 back to the first area 210 (e.g., increase max speed, resume scheduled communications, etc.).

Additionally, the server 110 can "prepare" for the material handling vehicle 140 to enter the second area 220 with poor signal strength. For example, if the server 110 determines that the material handling vehicle 140 is in or soon to be in the second area 220, the server 110 can transmit a batch of orders (e.g., orders to move specific pallets within the facility, etc.) to the material handling vehicle 140. The material handling vehicle 140 can then fulfill the batch of orders (e.g., by moving multiple pallets withing the facility, etc.) and refrain from communicating with the server 110 until the fulfillment of the batch of orders is complete. Moreover, the server 140 can cause various types of alerts to be presented via the material handling vehicle 140 or otherwise to personnel associated with the facility. For example, the server 110 can cause an alert to be presented to an operator of the material handling vehicle 140 responsive to determining that the material handling vehicle 140 is in or soon to be in the second area 220. The server 110 can cause the alert to be presented visually and/or audibly via the material handling vehicle 140 (e.g., via a screen, via speakers, etc.) and/or via a computing device that is associated with the operator of the material handling vehicle 140 (e.g., a smartphone, a tablet, etc.).

Moreover, the server 110 can alert personnel associated with the facility that material handling vehicle 140 is in or soon to be in the second area 220 (e.g., via a workstation computer, via one or more personal computing devices, etc.) in examples where the material handling vehicle 140 is an autonomous material handling vehicle without a human operator. Also, the server 110 can alert personnel associated with the facility e.g., via a workstation computer, via one or more personal computing devices, etc.) that the second area 220 has poor signal strength (e.g., if the second signal strength determined at block 420 is below a threshold). Such an alert can indicate to the personnel associated with the facility that one or more remedial actions (e.g., installing one or more signal strength boosting devices, etc.) should be taken to improve the second signal strength within the second area 220. Additionally, the server 110 can use the signal strength heat map 200 and various data associated with the material handling vehicle 130 and the material handling vehicle 140 to dynamically plan the "fixing" of low signal strength areas to manage the workloads (orders) handled by the material handling vehicles for any particular time period. Also, the server 110 can only send new orders to the material handling vehicle 130 and the material handling vehicle 140 when they are in the first area 210.

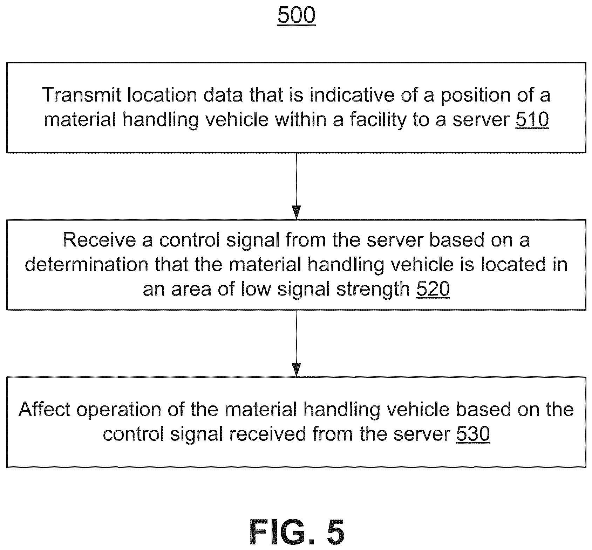

Referring to FIG. 5, a flow diagram of yet another example process 500 for controlling material handling vehicle operations is shown, in accordance with some aspects of the disclosure. The process 400 can generally be performed by the system 100 to affect operation of the material handling vehicle 130 and/or the material handling vehicle 140 based on signal strength associated with the network 120. For example, the process 400 can be performed by the material handling vehicle 130 or the material handling vehicle 140 within the system 100.

At block 510, the process 500 can include transmitting location data that is indicative of a position of a material handling vehicle within a facility to a server. For example, the material handling vehicle 140 can transmit location data that is indicative of the position of the material handling vehicle 140 to the server 110. The material handling vehicle 140 can transmit the location data at block 510 in a variety of suitable manners. For example, the material handling vehicle 140 can transmit the location data to the server 110 via the network 120 (e.g., from the controller 142, from the location tag 149, etc.). Also, the material handling vehicle 140 can transmit the location data to the server 110 indirectly (e.g., through one or more of the network devices 150, etc.). For example, the location tag 149 installed on the material handling vehicle 140 can transmit the location data to a location device that is installed in a fixed location in the facility, and the location device can then communicate the location data to the server 110.

At block 520, the process 500 can include receiving a control signal from the server based on a determination that the material handling vehicle is located in an area of low signal strength. For example, the material handling vehicle 140 can receive the control signal from the server 110 at block 520 based on a determination made by the server 110 (and/or one or more of the network devices 150) that the material handling vehicle 140 is located in the second area 220. In some examples, the server 110 can use the signal strength heat map 200 to determine that the material handling vehicle 140 is located in the second area 220 (or is soon to be located in the second area 220 after crossing a defined boundary).

At block 530, the process 500 can include affecting operation of the material handling vehicle based on the control signal received from the server. For example, the controller 142 can execute the control signal received from the server 110 at block 530 to affect operation of the material handling vehicle 140 in accordance with the control signal. The controller 142 can affect operation of the material handling vehicle 140 based on the control signal in various suitable manners. For example, the controller 142 can limit functionality of the material handling vehicle (e.g., by delaying communications for transmission via the network 120, by lowering a maximum speed for the material handling vehicle 140, etc.). The controller 142 can affect operation of the material handling vehicle 140 based on the control signal by rerouting the material handling vehicle 140 (e.g., changing a destination, etc.) or by presenting an alert to an operator and/or other facility personnel (e.g., by turning on and/or changing the color of one or more lights in the facility and/or on the material handling vehicle 140, etc.), among other possibilities.

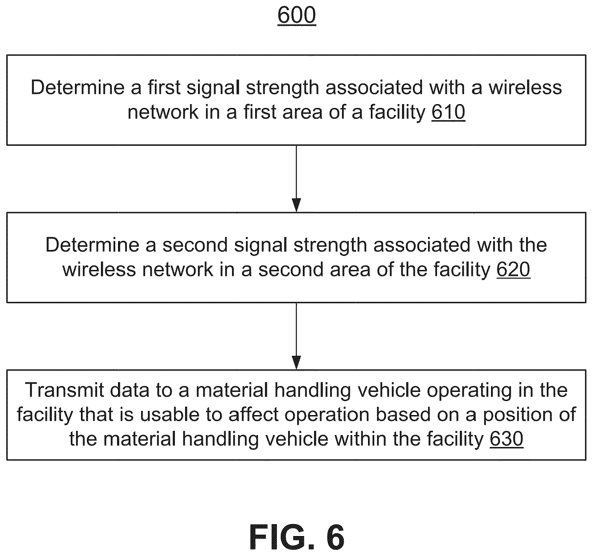

Referring to FIG. 6, a flow diagram of still another example process 600 for controlling material handling vehicle operations is shown, in accordance with some aspects of the disclosure. The process 600 can generally be performed by the system 100 to affect operation of the material handling vehicle 130 and/or the material handling vehicle 140 based on signal strength associated with the network 120. For example, the process 600 can yet again be performed by the server 110 within the system 100.

At block 610, the process 600 can include determining a first signal strength associated with a wireless network in a first area of a facility. For example, the server 110 can determine the first signal strength as being associated with the first area 210. The server 110 can determine the first signal strength at block 610 in a variety of suitable manners. For example, the server 110 can receive data from one or more devices connected to the network 120 (e.g., the controller 132, the controller 142, the network devices 150, etc.) that is indicative of the signal strength associated with the network 120 in the first area 210. The server 110 can also execute one or more simulations to predict the signal strength associated with the network 120 in the first area 210. Personnel associated with the facility can also, in some examples, conduct a site survey to determine the signal strength associated with the network 120 in the first area 210, and the server 110 can use data from the site survey (e.g., as uploaded to the server 110 by personnel that conduct the site survey, etc.) to determine the first signal strength. The first signal strength can vary depending on the type of network connection being analyzed.

At block 620, the process 400 can include determining a second signal strength that is associated with a wireless network in a second area of the facility. For example, the server 110 can determine the second signal strength as being associated with the second area 220. The server 110 can determine the second signal strength at block 620 in a variety of suitable manners. For example, the server 110 can receive data from one or more devices connected to the network 120 (e.g., the controller 132, the controller 142, the network devices 150, etc.) that is indicative of the signal strength associated with the network 120 in the second area 220. The server 110 can also execute one or more simulations to predict the signal strength associated with the network 120 in the second area 220. Moreover, personnel associated with the facility can conduct a site survey to determine the signal strength associated with the network 120 in the second area 220, and then the server 110 can use data from the site survey (e.g., as uploaded to the server 110, etc.) to determine the second signal strength. The second signal strength can vary depending on the type of network connection being analyzed. Generally, the second signal strength can be lower than the first signal strength, indicating that the material handling vehicle 130 and the material handling vehicle 140 may experience connectivity issues associated with the network 120 when traveling through the second area 220.

At block 630, the process 600 can include transmitting data to a material handling vehicle operating in the facility that is usable by the material handling vehicle to affect operation of the material handling vehicle based on a position of the material handling vehicle within the facility. For example, the server 110 can transmit the signal strength signal strength heat map 200 to the material handling vehicle 130 such that the material handling vehicle can use the signal strength heat map 200 to affect operation of the material handling vehicle 130. As such, the material handling vehicle 130 can adjust operations based on signal strength without having to communicate location data to the server 110. Instead, the material handling vehicle 130 can use the signal strength heat map 200 to determine whether it is located in the first area 210 or the second area 220, for example, and adjust operation accordingly. In some examples, the server 110 can also transmit one or more rules (e.g., "weak" signal strength rules, "strong" signal strength rules, etc.) to the material handling vehicle 130 at block 630 that can be used by the material handling vehicle 130 to affect operation of the material handling vehicle 130. The server 110 can send updates to the signal strength heat map 200 and/or to the rules based on various factors (e.g., at predefined time intervals, in response to triggers, etc.).

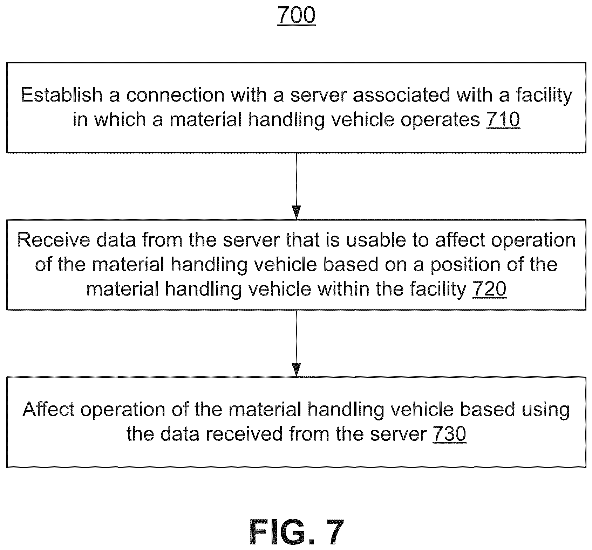

Referring to FIG. 7, a flow diagram of a further example process 700 for controlling material handling vehicle operations is shown, in accordance with some aspects of the disclosure. The process 700 can generally be performed by the system 100 to affect operation of the material handling vehicle 130 and/or the material handling vehicle 140 based on signal strength associated with the network 120. For example, the process 700 can again be performed by the material handling vehicle 130 or the material handling vehicle 140 within the system 100.

At block 710, the process 700 can include establishing a connection with a server associated with a facility in which a material handling vehicle operates. For example, the material handling vehicle 130 can establish a connection with the server 110 via the network 120. The material handling vehicle 130 can establish the connection with the server 110 at block 710 using the network interface 138, for example. The memory 134 can store instructions that, upon startup of the controller 132, can be executed by the processing circuitry 136 to establish the connection with the server 110 via the network interface 138 and the network 120. In some examples, the material handling vehicle 130 can communicate a vehicle identifier and/or other types of identifiers to the server 110 to establish the connection at block 710.

At block 720, the process 700 can include receiving data from the server that is usable to affect operation of the material handling vehicle based on a position of the material handling vehicle within the facility. For example, the material handling vehicle 130 can receive data from the server 110 via the network 120 that is usable by the material handling vehicle 130 to affect operation of the material handling vehicle 130 based on the position of the material handling vehicle 130 within the facility. The data received by the material handling vehicle 130 from the server 110 at block 720 can include the signal strength heat map 200 and/or transmit one or more rules (e.g., "weak" signal strength rules, "strong" signal strength rules, etc.) that can be used by the material handling vehicle 130 to affect operation of the material handling vehicle 130 based on signal strength. The material handling vehicle 130 can receive updates to the signal strength heat map 200 and/or to the rules as appropriate (e.g., at predefined time intervals, in response to triggers, etc.). The material handling vehicle 130 can receive the data at block 720 via the network interface 138 and can store the data (e.g., the signal strength heat map 200, the rules, etc.) in the memory 134, for example.

At block 730, the process 700 can include affecting operation of the material handling vehicle based on the data received from the server. For example, the material handling vehicle 130 can use the data received from the server 110 at block 720 to affect the operation of the material handling vehicle 130. The material handling vehicle 130 can use the signal strength heat map 200 to determine whether it is located in the first area 210 or the second area 220. Then, depending on whether the material handling vehicle 130 determines that it is located in the first area 210 or whether it is located in the second area 220, the material handling vehicle 130 can perform one or more actions accordingly. For example, the controller 132 can limit certain functionality of the material handling vehicle (e.g., by delaying communications for transmission via the network 120, by lowering a maximum speed for the material handling vehicle 130, etc.) if the controller 132 determines that the material handling vehicle 130 is located in the second area 220. The controller 132 can also reroute the material handling vehicle 130 (e.g., changing a destination, rerouting to ensure that the material handling vehicle 130 completes a current order without entering the second area 220, etc.) or can present an alert to an operator of the material handling vehicle 130, among other possibilities. As such, the material handling vehicle 130 can adjust its operations based on signal strength without having to communicate location data to the server 110 by using the signal strength heat map 200 received from the server 110.

While the steps of the process 300, the process 400, the process 500, the process 600, and the process 700 are shown in a particular order in FIGS. 3-7, respectively, the process 300, the process 400, the process 500, the process 600, and the process 700 may not include all steps shown, may include additional steps, or may include the steps in a different order. Also, machine-readable instruction for performing the process 300, the process 400, and the process 600 can be stored in the memory 114, and machine-readable instruction for performing the process 500 and the process 700 can be stored in the memory 134 and/or the memory 144.

For certain types of vehicles there are training requirements imposed by various government agencies, laws, rules and regulations. For example, the United States Department of Labor Occupational Safety and Health Administration (OSHA) imposes a duty on employers to train and supervise operators of various types of material handling vehicles. Recertification every three years is also required. In certain instances, refresher training in relevant topics shall be provided to the operator when required. In all instances, the operator remains in control of the material handling vehicle during performance of any actions. Further, a warehouse manager remains in control of the fleet of material handling vehicles within the warehouse environment. The training of operators and supervision to be provided by warehouse managers requires among other things proper operational practices including among other things that an operator remain in control of the material handling vehicle, pay attention to the operating environment, and always look in the direction of travel.

While various spatial and directional terms, such as top, bottom, lower, mid, lateral, horizontal, vertical, front, and the like may be used to describe examples of the present disclosure, it is understood that such terms are merely used with respect to the orientations shown in the drawings. The orientations may be inverted, rotated, or otherwise changed, such that an upper portion is a lower portion, and vice versa, horizontal becomes vertical, and the like.

Within this specification, aspects have been described in a way which enables a clear and concise specification to be written, but it is intended and will be appreciated that aspects may be variously combined or separated without parting from the present disclosure. For example, it will be appreciated that all preferred features described herein are applicable to all aspects of the disclosed technology described herein.

Thus, while the disclosed technology has been described in connection with particular aspects and examples, the disclosed technology is not necessarily so limited, and that numerous other aspects, examples, uses, modifications and departures from the aspects, examples, and uses are intended to be encompassed by the claims attached hereto. The entire disclosure of each patent and publication cited herein is incorporated by reference, as if each such patent or publication were individually incorporated by reference herein.

Various features and advantages of the present disclosure are set forth in the following claims.

## Claims

1. A material handling vehicle (130, 140), comprising:
memory (134, 144) comprising machine-readable instructions;
a network interface (138, 148) to connect the material handling vehicle (130, 140) to a wireless network (120); and
processing circuitry (136, 146) to execute the machine-readable instructions to:
establish, via the wireless network, a connection with a server (110) that is associated with a facility in which the material handling vehicle (130, 140) operates;
receive, via the wireless network (120) and from the server (110), data that is usable to affect operation of the material handling vehicle (130), 140) based on whether the material handling vehicle (130, 140) is located in a first area (210) of the facility or is located within a second area (220) of the facility, wherein the first area (210) of the facility is associated with a first signal strength of the wireless network (120), the second area (220) of the facility is associated with a second signal strength of the wireless network (120), and the second signal strength is lower than the first signal strength; and
affect operation of the material handling vehicle (130, 140) using the data that is received from the server (110).

2. The material handling vehicle (130, 140) of claim 1, wherein:
the data that is received from the server (110) comprises a signal strength heat map (200);
the signal strength heat map (200) indicates a first range of coordinates that is associated with the first area (210) of the facility; and
the signal strength heat map (200) indicates a second range of coordinates that is associated with the second area (220) of the facility.

3. The material handling vehicle (130, 140) of claim 2, wherein, to affect operation of the material handling vehicle (130, 140) using the data that is received from the server (110), the processing circuitry is to execute the machine-readable instructions to:
store the signal strength heat map (200) in the memory (134, 144);
determine a location of the material handling vehicle (130, 140); and
determine that the location of the material handling vehicle (130, 140) corresponds to the first range of coordinates or to the second range of coordinates by comparing the location of the material handling vehicle (130, 140) to the signal strength heat map (200) stored in the memory (134, 144).

4. The material handling vehicle (130, 140) of claim 3, wherein, to determine the location of the material handling vehicle (130, 140), the processing circuitry (136, 146) is to execute the machine-readable instructions to:
receive data from a location device (150) that is installed in a fixed location in the facility; and
determine a set of coordinates that is indicative of the location of the material handling vehicle (130, 140) based on the data received from the location device (150).

5. The material handling vehicle (130, 140) of any of the preceding claims, wherein, to affect operation of the material handling vehicle (130, 140) using the data that is received from the server (110), the processing circuitry (136, 146) is to execute the machine-readable instructions to:
determine that the material handling vehicle (130, 140) is located in the second area (220) of the facility; and
limit functionality of the material handling vehicle (130, 140) responsive to determining that the material handling vehicle (130, 140) is located in the second area (220) of the facility.

6. The material handling vehicle of claim 5, wherein, to limit functionality of the material handling vehicle (130, 140), the processing circuitry (136, 146) is to execute the machine-readable instructions to delay communications to the server (110).

7. The material handling vehicle (130, 140) of claim 5, wherein, to limit functionality of the material handling vehicle (130, 140), the processing circuitry (136, 146) is to lower a maximum speed for the material handling vehicle (130, 140).

8. The material handling vehicle (130, 140) of any of claims 1-4, wherein, to affect operation of the material handling vehicle (130, 140) using the data that is received from the server (110), the processing circuitry (136, 146) is to execute the machine-readable instructions to:
determine that the material handling vehicle (130, 140) is located in the second area (220) of the facility; and
reroute the material handling vehicle (130, 140) responsive to determining that the material handling vehicle (130, 140) is located in the second area (220) of the facility.

9. The material handling vehicle (130, 140) of any of claims 1-4, wherein, to affect operation of the material handling vehicle (130, 140) using the data that is received from the server (110), the processing circuitry (136, 146) is to execute the machine-readable instructions to:
determine that the material handling vehicle (130, 140) is located in the second area (220) of the facility; and
cause an alert to be presented to an operator of the material handling vehicle (130, 140) responsive to determining that the material handling vehicle (130, 140) is located in the second area (220) of the facility.

10. The material handling vehicle (130, 140) of any of claims 1-4, wherein, to affect operation of the material handling vehicle (130, 140) using the data that is received from the server (110), the processing circuitry (136, 146) is to execute the machine-readable instructions to:
receive, via the wireless network (120) and from the server (110), a batch of orders; and
fulfill the batch of orders received via the wireless network (120) and from the server (110).

11. A method performed by a material handling vehicle (130, 140), the method comprising:
establishing, via a wireless network (120), a connection with a server (110) that is associated with a facility in which the material handling vehicle (130, 140) operates (710);
receiving, via the wireless network (120) and from the server (110), data that is usable to affect operation of the material handling vehicle (130, 140) based on whether the material handling vehicle (130, 140) is located in a first area (210) of the facility or is located within a second area (220) of the facility, wherein the first area (210) of the facility is associated with a first signal strength of the wireless network (120), the second area (220) of the facility is associated with a second signal strength of the wireless network (120), and the second signal strength is lower than the first signal strength (720); and
affecting operation of the material handling vehicle (130, 140) using the data that is received from the server (110) (730).

12. The method of claim 11, wherein:
the data that is received from the server (110) comprises a signal strength heat map (200);
the signal strength heat map indicates a first range of coordinates that is associated with the first area (210) of the facility; and
the signal strength heat map indicates a second range of coordinates that is associated with the second area (220) of the facility.

13. The method of claim 12, wherein affecting operation of the material handling vehicle (130, 140) using the data that is received from the server (110) comprises:
receiving data from a location device (150) that is installed in a fixed location in the facility;
determining a set of coordinates that is indicative of a location of the material handling vehicle (130, 140) based on the data received from the location device (150); and
determining that the set of coordinates that is indicative of the location of the material handling vehicle (130, 140) corresponds to the first range of coordinates or to the second range of coordinates.

14. The method of any of claims 11-13, wherein affecting operation of the material handling vehicle (130, 140) using the data that is received from the server (110) comprises:
determining that the material handling vehicle (130, 140) is located in the second area (220) of the facility; and
delaying communications to the server responsive to determining that the material handling vehicle (130, 140) is located in the second area (220) of the facility.

15. The method of any of claims 11-13, wherein affecting operation of the material handling vehicle (130, 140) using the data that is received from the server (110)comprises:
determining that the material handling vehicle (130, 140) is located in the second area (220) of the facility; and
rerouting the material handling vehicle (130, 140) responsive to determining that the material handling vehicle (130, 140) is located in the second area (220) of the facility.
